# EUROPÄISCHE PATENTSCHRIFT

(11) **EP 3 025 354 B1**
(45) Veröffentlichungstag und Bekanntmachung des Hinweises auf die Patenterteilung: **12.03.2025**
(21) Anmeldenummer: 14726991.4
(22) Anmeldetag: 28.05.2014
(51) Int. Cl.: G21F 9/06, B01D 61/02, G21F 9/12, C02F 1/28, B01D 61/08, B01D 71/02, C02F 101/00, C02F 1/44

(54) **VERFAHREN UND ANLAGE ZUM ENTFERNEN RADIOAKTIVER NUKLIDE AUS WASSER**
PROCESS AND APPARATUS FOR THE REMOVAL OF RADIONUCLIDES FROM WATER
PROCÉDÉ ET APPAREIL POUR L'ENLÈVEMENT DES RADIONUCLIDES DE L'EAU

(43) Veröffentlichungstag der Anmeldung: 01.06.2016
(73) Patentinhaber: CERAFILTEC Germany GmbH, 66121 Saarbrücken (DE)
(72) Erfinder: KASCHEK, Martin, 66386 St. Ingbert (DE); SHOAR, Behnaz, 66111 Saarbrücken (DE); POTH, Heiko, 66538 Neunkirchen (DE); GABRIEL, Kay Gunther, Jeddah 21432 (SA)
(74) Vertreter: Grättinger Möhring von Poschinger Patentanwälte Partnerschaft mbB
(86) Internationale Anmeldenummer: PCT/EP2014/061134
(87) Internationale Veröffentlichungsnummer: WO 2015/180772

(56) Entgegenhaltungen:
- EP-A1- 1 820 565
- WO-A1-2013/034442
- FR-A1- 2 624 758
- US-A- 4 636 367

## Beschreibung

Die vorliegende Erfindung betrifft ein Verfahren zum Entfernen von radioaktiven Nukliden aus Wasser, mit den Merkmalen des Oberbegriffs des Anspruchs 1. Die Erfindung betrifft außerdem eine Anlage zum Entfernen von radioaktiven Nukliden aus Wasser, mit den Merkmalen des Oberbegriffs des Anspruchs 12.

Wasser ist in vielen Ländern ein kostbares Gut, so etwa in zahlreichen afrikanischen und arabischen Staaten, in denen aufwändige Maßnahmen getroffen werden müssen, um den Bedarf an Trink- und Betriebswasser zu decken. In einigen Ländern werden dabei erhebliche Mengen Wasser aus Tiefbrunnen gefördert oder über Meerwasserentsalzungsanlagen bereitgestellt. Problematisch ist allerdings, dass Wasser aus Tiefbrunnen sehr häufig sehr hohe Anteile an radioaktiven Nukliden und Schwermetallsalzen wie Eisensalzen und Mangansalzen enthält. In Wasser aus Tiefbrunnen findet man insbesondere die Isotope ²²⁶Ra und ²²⁸Ra, aber auch das an die gleiche Zerfallskette gebundene ²²⁸Th, wobei Ra für Radium und Th für Thorium steht. Diese radioaktiven Nuklide werden insbesondere durch den Zerfall von natürlich vorkommendem Uran gebildet. Im Tiefengrundwasser sind die radioaktiven Nuklide in der Regel zum Einen in der Form von gelösten Ionen und zum Anderen gebunden an sehr kleine mineralische Schwebstoffe enthalten. Wasser, das radioaktive Nuklide enthält, kann im Folgenden auch als kontaminiertes Wasser bezeichnet werden. Mithilfe eines Verfahrens bzw. einer Anlage der eingangs genannten Art erzeugtes Produktwasser, dem die radioaktiven Nuklide weitgehend entzogen sind, kann daher auch als dekontaminiertes Wasser bezeichnet werden. Das Produktwasser kann dann als Trinkwasser oder Betriebswasser verwendet werden oder weiter zu Trinkwasser bzw. Betriebswasser aufbereitet werden.

Tiefengrundwasser kann grundsätzlich mittels Umkehrosmoseverfahren gereinigt werden, durch die große Teile der im Wasser enthaltenen Fracht abgetrennt werden können. Damit die dabei zum Einsatz kommenden Umkehrosmosemembranen nicht zu stark belastet werden, sind der Reinigung mittels Umkehrosmose üblicherweise mehrere Vorreinigungsschritte vorgeschaltet. Dabei kann es sich beispielsweise um Filtrationsschritte handeln, bei denen die erwähnten im Wasser enthaltenen Schwebeteilchen sowie ausgefällte Schwermetallverbindungen und die daran gebundenen radioaktiven Nuklide abgetrennt werden sollen.

Für derartige Filtrationsaufgaben können beispielsweise Sandfilter zum Einsatz kommen. Derartige Sandfilter haben diverse Nachteile. Nach einigen Monaten haben sich in den Sandfiltern regelmäßig derart hohe Mengen an radioaktiven Nukliden festgesetzt, dass die Filter ersetzt werden müssen. Eine Regeneration der Filter ist nicht praktikabel. Ihre Entsorgung ist allein aufgrund der außerordentlich großen Mengen an kontaminiertem Sand problematisch.

Des Weiteren werden die im Tiefengrundwasser enthaltenen radioaktiven Nuklide, wie z.B. Radium- oder Thorium-Ionen, allein durch einen Sandfilter nur unzureichend abgetrennt. Es wird daher versucht, die radioaktiven Nuklide auf chemische Weise auszufällen, bevor das Tiefengrundwasser in den Sandfilter eintritt. Die ausfallenden radioaktiven Fällungsprodukte können dann im Sandfilter zurückgehalten werden. Beispielsweise kann mit Hilfe wasserlöslicher Bariumsalze, wie z.B. Bariumchlorid, eine Ausfällung radioaktiver Nuklide bewirkt werden. Allerdings handelt es sich bei Bariumchlorid um eine vergleichsweise giftige und teure Chemikalie.

Aus der WO 2013/034442 A1 sind ein Verfahren sowie eine Anlage zum Entfernen von radioaktiven Nukliden aus Wasser der eingangs genannten Art bekannt. Beim gattungsgemäßen Verfahren werden somit einerseits ein Adsorptionsadditiv, das für die Nuklide absorbierend wirkt, und andererseits eine Filtereinrichtung verwendet, die für das Adsorptionsadditiv und daran adsorbierte Nuklide im Wesentlichen undurchlässig ist. Als Adsorptionsadditiv kommt beim bekannten Verfahren in erster Linie Mangandioxid zum Einsatz. Die bekannte Anlage umfasst zumindest eine Filtrierstation, die in einem Filterbecken wenigstens eine Filtereinrichtung enthält, die von einer Wasserströmung durchströmbar ist. Ferner umfasst die bekannte Anlage zumindest eine Dosiereinrichtung zum Zugeben des Adsorptionsadditivs zur Wasserströmung. Bei der bekannten Anlage erfolgt die Zugabe des Adsorptionsadditivs zur Wasserströmung innerhalb eines Mischers mit nachgeschaltetem Mischbecken einer Mischstation, die der Filtrierstation vorgeschaltet ist. Innerhalb des Mischbeckens besitzt die Wasserströmung eine relativ große Verweildauer, die für eine homogene Verteilung des Adsorptionsadditivs innerhalb der Wasserströmung erforderlich ist. Eine homogene Verteilung des Adsorptionsadditivs innerhalb der Wasserströmung begünstigt die Adsorption der in der Wasserströmung enthaltenen Nuklide. Bei der bekannten Anlage bzw. beim bekannten Verfahren erfolgt die Entfernung der Nuklide aus dem Wasser somit dadurch, dass sich die Nuklide innerhalb des Mischbeckens, also stromauf der jeweiligen Filtereinrichtung, an das Adsorptionsadditiv anlagern. Hierzu muss in der Mischstation permanent das Adsorptionsadditiv der Wasserströmung zugeführt werden. Dabei erfolgt die Zugabe beispielsweise mit einer Konzentration von maximal 10 ppm. Durch die große Verweildauer in der Mischstation kann ein großer Anteil der im Wasser enthaltenen Nuklide vom Adsorptionsadditiv adsorbiert werden. In der nachfolgenden Filtrierstation erfolgt dann das Ausfiltern des Adsorptionsadditivs mit daran adsorbierten Nukliden. Dabei kann sich an einer anströmseitigen Oberfläche der jeweiligen Filtereinrichtung ein sogenannter Filterkuchen ("Cake Layer") ausbilden, der während des gesamten Filtrationsprozesses gleichmäßig und langsam anwächst und der aus einer Anlagerung abgeschiedener Verunreinigungen besteht, also weitgehend aus dem Adsorptionsadditiv mit adsorbierten Nukliden sowie aus anderen gegebenenfalls im Wasser enthaltenen partikulären Verunreinigungen. Beim bekannten Verfahren erfolgt somit die Adsorption der Nuklide am Absorptionsadditiv innerhalb der Mischstation und somit stromauf der Filtrierstation.

Mit Hilfe einer derartigen, herkömmlichen Anlage bzw. mit Hilfe eines derartigen, herkömmlichen Verfahrens lassen sich in einem einstufigen Prozess derzeit maximal 80 % der Nuklide aus dem Wasser abscheiden. Für Trinkwasserqualität sind daher weitere Maßnahmen erforderlich. Insbesondere kann das Verfahren in mehreren Stufen, also mehrfach zur Anwendung kommen, um eine gewünschte hohe Filtrationswirkung zu erzielen. Dementsprechend sind die bekannten Verfahren und Anlagen vergleichsweise aufwändig in ihrer Realisation.

Ferner gehen bekannte Verfahren und Anlagen davon aus, dass der Gesamtwasserstrom im Rahmen einer Vorbehandlung, in welcher mit Hilfe des Adsorptionsadditivs die Nuklide absorbiert werden, eine gleichmäßige Behandlung erhält. Dies führt dazu, dass für den Gesamtprozess nur gleiche Wasserqualitäten erzielt werden können. Eine bedarfsgerechte Teilstrombehandlung mit unterschiedlichen Entfernungsraten für die jeweiligen Nuklide ist mit herkömmlichen Verfahren bzw. Anlagen nicht oder nur mit hohem technischem Aufwand möglich.

Für eine optimale Durchmischung und Adsorption der Nuklide ist eine Verweildauer im jeweiligen Mischbecken von ca. 30 min. erforderlich, wodurch das Mischbecken abhängig vom Volumenstrom der zu reinigenden Wasserströmung entsprechend groß dimensioniert werden muss. Demensprechend erhöht sich auch der Aufwand zur Realisierung einer derartigen Anlage.

Aus der FR 2 624 758 A1 sind fertige Keramikfilter als Kartusche mit Mangandioxid als Adsorptionsmittel bekannt.

Die EP 1 820 565 A1 offenbart Fe(OH)3 als Verblockung in Form einer Deckschicht auf der keramikbasierten Filtermembran.

Die US 4 636 367 A lehrt die Radiumentfernung aus Wasser mittels löslicher Bariumsalze und Quarzsandfilterung.

Die vorliegende Erfindung beschäftigt sich mit dem Problem, für ein Verfahren bzw. für eine Anlage der vorstehend beschriebenen Art eine verbesserte Ausführungsform anzugeben, die sich insbesondere durch einen besonders hohen Abscheidegrad und/oder durch eine vereinfachte Realisierbarkeit auszeichnet.

Dieses Problem wird durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Adsorption der Nuklide am Adsorptionsadditiv unmittelbar an der jeweiligen Filtereinrichtung durchzuführen, indem an einer anströmseitigen Oberfläche der jeweiligen Filtereinrichtung mithilfe des Adsorptionsadditivs eine Adsorptionsschicht erzeugt wird. Die Adsorptionsschicht kann dabei nach Art eines Filterkuchens erzeugt werden, indem einer die jeweilige Filtereinrichtung durchströmenden Wasserströmung das Adsorptionsadditiv stromauf der jeweiligen Filtereinrichtung zugeführt wird. Während des Betriebs der jeweiligen Anlage bzw. während der Durchführung des Verfahrens strömt das kontaminierte Wasser zuerst durch die Adsorptionsschicht und anschließend durch die Filtereinrichtung. Bei der Durchströmung der Adsorptionsschicht werden die mitgeführten Nuklide adsorbiert, während die jeweilige Filtereinrichtung das Adsorptionsadditiv mit angelagerten Nukliden in der Adsorptionsschicht zurückhält.

Die Adsorptionsschicht besteht dabei zumindest zu Beginn einer Filtrationsphase eines Filtrationsprozesses weitgehend aus dem Adsorptionsadditiv, also zu mindestens 50 %, vorzugsweise zu mindestens 75 % und insbesondere zu mindestens 90 %. Andere Bestandteile der Adsorptionsschicht können durch Schwebteilchen gebildet sein, die ebenfalls in der Wasserströmung enthalten sein können. Das Adsorptionsadditiv ist dabei eine einzige Chemikalie oder eine Gemisch aus wenigstens zwei verschiedenen Chemikalien, wobei die jeweilige Chemikalie für das jeweilige Nuklid adsorbierend wirkt. Denkbar ist beispielsweise ein Gemisch aus Chemikalien, die für verschiedene Nuklide adsorbierend wirken. Besonders vorteilhaft ist dabei auch die Realisierung einer mehrlagigen Adsorptionsschicht. So könnte beispielsweise eine erste Lage zuerst auf die anströmseitige Oberfläche aufgebracht werden, die aus dem jeweiligen, für die störenden Nuklide adsorbierend wirkende Adsoptionsadditiv besteht, während eine zweite Lage anschließend auf die erste Lage aufgebracht wird, die aus einer anderen Chemikalie besteht, die andere Wasserinhaltsstoffe adsorbieren kann, beispielsweise solche, die für die Adsorption der Nuklide störend wirken können.

Innerhalb dieser Adsorptionsschicht besteht eine extrem hohe Konzentration aus Adsorptionsadditiv, so dass bei einer Durchströmung der Adsorptionsschicht von Wasser, das mit radioaktiven Nukliden kontaminiert ist, eine effiziente Adsorption der Nuklide erfolgt. Erfindungsgemäß wird somit die Adsorption der Nuklide in den Bereich der jeweiligen Filtereinrichtung verlagert, nämlich in die jeweilige Adsorptionsschicht. Insoweit wirkt die jeweilige Filtereinrichtung nach Art eines Adsorptionsfilters.

Das erfindungsgemäße Verfahren bzw. die erfindungsgemäße Anlage kommt somit grundsätzlich ohne vorgeschaltete Mischstation aus, die in einem entsprechenden Mischbecken eine relativ große Verweildauer für die Wasserströmung bereitstellt, um eine ausreichende Homogenisierung für die gewünschte Adsorption, die innerhalb des Mischbeckens stattfindet, zu schaffen. Dementsprechend entfällt bei der Erfindung der hierzu erforderliche apparative Aufwand. Insbesondere zeichnet sich die erfindungsgemäße Anlage dadurch aus, dass die Dosiereinrichtung das Adsorptionsadditiv innerhalb eines Filterbeckens der Wasserströmung zuführt, also unmittelbar stromauf der jeweiligen Filtereinrichtung. Eine Verweildauer wird nicht benötigt. Es ist lediglich zweckmäßig, die Adsorptionsschicht möglichst gleichmäßig auf der gesamten anströmseitigen Oberfläche der jeweiligen Filtereinrichtung aufzubringen.

Des Weiteren hat sich gezeigt, dass beim erfindungsgemäßen Verfahren deutlich höhere Abscheidegrade realisierbar sind. In Versuchen konnten Abscheidegrade von mehr als 90 % und teilweise sogar von mehr als 95 % realisiert werden. Erklärt wird dies damit, dass innerhalb der Adsorptionsschicht, die vom kontaminierten Wasser durchströmt wird, extrem kurze Migrationswege für die Nuklide zum Adsorptionsadditiv vorliegen, die ausreichen, die im Wasser mitgeführten Nuklide nahezu vollständig zu adsorbieren.

Beim erfindungsgemäßen Verfahren wird somit der jeweiligen Filtereinrichtung kontaminiertes Wasser in Form einer Wasserströmung zugeführt. Diese Wasserströmung durchströmt die jeweilige Filtereinrichtung und somit zwangsläufig auch die Adsorptionsschicht, wobei die mitgeführten Nuklide vom Adsorptionsadditiv weitgehend adsorbiert werden. Von der jeweiligen Filtereinrichtung kann somit dekontaminiertes Wasser abgeführt werden.

Entsprechend einer vorteilhaften Ausführungsform wird die Adsorptionsschicht aus Adsorptionsadditiv erzeugt, das im Wesentlichen noch frei von Nukliden ist. Zusätzlich oder alternativ kann vorgesehen sein, dass die Adsorptionsschicht mit Adsorptionsadditiv erzeugt wird, das mindestens zu 50 %, vorzugsweise mindestens zu 75 % und insbesondere mindestens zu 90 %, frei von Nukliden ist. Das bedeutet, dass in diesen Fällen das Adsorptionsadditiv so in die Wasserströmung eingebracht wird, dass bis zur Anlagerung an der jeweiligen Filtereinrichtung im Wesentlichen keine Zeit zur Verfügung steht, die für eine Adsorption von Nukliden ausreichen kann, die in der Wasserströmung mitgeführt sein können. Ebenso ist unabhängig davon denkbar, das Erzeugen der Absorptionsschicht mit Hilfe einer Wasserströmung zu bewirken, die aus gereinigtem Wasser besteht, also aus Wasser, das keine bzw. im Wesentlichen keine radioaktive Nuklide enthält. Auf diese Weise wird innerhalb der Adsorptionsschicht eine besonders hohe Adsorptionswirkung für die mitgeführten Nuklide erzeugt.

Gemäß einer anderen vorteilhaften Ausführungsform kann das Verfahren so ausgeführt werden, dass die Adsorption der Nuklide während einer Filtrationsphase eines Filtrationsprozesses weitgehend oder im Wesentlichen innerhalb der Adsorptionsschicht erfolgt. Zusätzlich oder alternativ kann vorgesehen sein, dass mindestens 50 %, vorzugsweise mindestens 75 % und insbesondere mindestens 90%, der Adsorption der Nuklide während einer Filtrationsphase eines Filtrationsprozesses innerhalb der Adsorptionsschicht erfolgt. Vorzugsweise erfolgt die Adsorption der Nuklide während der Filtrationsphase erst bzw. ausschließlich innerhalb der Adsorptionsschicht. Durch diese Vorgehensweise wird weitgehend bzw. vollständig auf eine Adsorption von Nukliden innerhalb der Wasserströmung stromauf der Filtereinrichtung verzichtet. Die weitgehende bzw. vollständige Adsorption erfolgt hier bei der Durchströmung der Adsorptionsschicht.

Gemäß einer anderen vorteilhaften Ausführungsform kann das Erzeugen der Adsorptionsschicht während einer Startphase eines Filtrationsprozesses erfolgen, nämlich durch Zugabe des Adsorptionsadditivs zu einer die jeweilige Filtereinrichtung durchströmenden Wasserströmung. Der Filtrationsprozess umfasst zusätzlich zur Startphase eine auf die Startphase folgende Filtrationsphase, die zeitlich größer ist als die Startphase. Vorzugsweise ist die Filtrationsphase zeitlich wenigstens 10-mal, insbesondere wenigstens 100-mal, größer als die Startphase. In der Filtrationsphase erfolgt dann die Durchströmung der Adsorptionsschicht mit kontaminiertem Wasser, wobei die Nuklide vom Adsorptionsadditiv weitgehend adsorbiert werden. Die Wasserströmung, der während der Startphase das Adsorptionsadditiv zum Erzeugen der Adsorptionsschicht zugegeben wird, kann aus dem kontaminierten, zu reinigendem Wasser bestehen, ebenso kann hierzu bereits gereinigtes Wasser verwendet werden, das keine bzw. im Wesentlichen keine Nuklide enthält.

Bei einer vorteilhaften Weiterbildung kann vorgesehen sein, dass das Adsorptionsadditiv der Wasserströmung weitgehend oder im Wesentlichen nur während der Startphase zugeführt wird. Zusätzlich oder alternativ kann vorgesehen sein, dass mindestens 50 %, vorzugsweise mindestens 75 % und insbesondere mindestens 90 %, des insgesamt während eines Filtrationsprozesses verwendeten Adsorptionsadditivs in der Adsorptionsschicht enthalten sind. Das bedeutet, dass während der Filtrationsphase relativ wenig bis kein Adsorptionsadditiv der Wasserströmung zugeführt wird.

Sofern die Zugabe des Adsorptionsadditivs ausschließlich während der Startphase zum Erzeugen der Adsorptionsschicht erfolgt, handelt es sich beim erfindungsgemäßen Verfahren um eine diskontinuierliche, nämlich nur während der Startphase stattfindende Zugabe des Adsorptionsadditivs. Im Unterschied dazu arbeiten bekannte, herkömmliche Verfahren, die eine der Filtrationsstation vorgeschaltete Mischstation aufweisen, mit einer kontinuierlichen Zugabe von Adsorptionsadditiv. Es hat sich gezeigt, dass beim erfindungsgemäßen Verfahren zum Reinigen einer vorbestimmten Wassermenge insgesamt weniger Adsorptionsadditiv benötigt wird, das diskontinuierlich während der Startphase zugegeben wird, als bei einem herkömmlichen Verfahren, bei dem das Adsorptionsadditiv kontinuierlich während des gesamten Filtrationsprozesses zugeführt wird.

Gemäß einer anderen vorteilhaften Ausführungsform kann das Adsorptionsadditiv zum Erzeugen der Adsorptionsschicht einer die jeweilige Filtereinrichtung durchströmenden Wasserströmung mit einer Konzentration von mindestens 50 ppm, zweckmäßig von mindestens 100 ppm, vorzugsweise von wenigstens 500 ppm und insbesondere von wenigstens 1000 ppm, zugeführt werden. Im Unterschied dazu wird bei bekannten Verfahren, die mit einer kontinuierlichen Zugabe des Adsorptionsadditivs arbeiten, das Adsorptionsadditiv mit einer Konzentration von maximal 10 ppm zugegeben. Mit anderen Worten, zum Erzeugen der Adsorptionsschicht wird der Wasserströmung das Adsorptionsadditiv in einer Dosierung zugemessen, die sehr viel höher ist, als sie für eine Adsorption der Nuklide stromauf der Filtereinrichtung erforderlich ist. Durch die Verwendung dieser hohen Konzentration lässt sich die Adsorptionsschicht relativ schnell aufbauen, so dass die Startphase entsprechend zeitlich kurz ausgelegt werden kann. Die Zugabe des Adsorptionsadditivs mit der vorstehend genannten hohen Konzentration erfolgt dabei innerhalb der Startphase während einer vorbestimmten Dosierzeit, die kürzer sein kann als die Startphase oder aber gleich lang ist wie die Startphase.

Bei einer bevorzugten Ausführungsform kann in der jeweiligen Filtereinrichtung wenigstens eine keramische Filtermembran verwendet werden. Diese Ausführungsform beruht auf der Erkenntnis, dass andere Filtermaterialien, beispielsweise Filtermembranen aus Kunststoff oder Sandfilter, ungeeignet sind für die hohen Konzentrationen an Adsorptionsadditiv, die beim erfindungsgemäßen Verfahren zum Erzeugen der Adsorptionsschicht verwendet werden können.

Zweckmäßig kann vorgesehen sein, dass das Adsorptionsadditiv ein Festkörper mit granulatartiger oder flockenartiger Struktur ist oder weitgehend aus einem derartigen Festkörper besteht. Der verwendete Festkörper kann dabei solid oder porös sein. Die Verwendung eines solchen partikelförmigen bzw. partikulären Festkörpers als Adsorptionsadditiv hat den Vorteil, dass die Adsorptionsschicht selbst eine poröse Struktur erhält, so dass sie leicht durchströmbar ist, wodurch auch die zur Verfügung stehende Adsorptionsoberfläche extrem groß ist, was eine rasche Adsorption begünstigt. Eine mittlere Porengröße innerhalb der Adsorptionsschicht ist dabei zweckmäßig größer als eine mittlere einlassseitige Porengröße des zur Anwendung kommenden Filtermaterials, wie z.B. eine keramische Filtermembran, der jeweiligen Filtereinrichtung.

Bei einer erfindungsgemäßen Anlage ist vorgesehen, dass die jeweilige Dosiereinrichtung das Adsorptionsadditiv im Betrieb der Anlage, insbesondere während der Startphase, der Wasserströmung innerhalb des jeweiligen Filterbeckens oder unmittelbar stromauf davon zugibt, also unmittelbar stromauf der jeweiligen Filtereinrichtung, so dass sich an der Filtereinrichtung anströmseitig die gewünschte Adsorptionsschicht ausbilden kann. Die Zugabe des Adsorptionsadditivs kann z.B. auch in eine Zuleitung erfolgen, die das kontaminierte Wasser dem jeweiligen Filterbecken zuleitet. Im Betrieb der Anlage wird der jeweiligen Filtrierstation bzw. dem jeweiligen Filterbecken kontaminiertes Wasser zugeführt und dekontaminiertes Wasser wird von der jeweiligen Filtrierstation bzw. von der jeweiligen Filtereinrichtung abgeführt. Die hier vorgestellte Anlage kommt somit für die Zugabe des Adsorptionsadditivs grundsätzlich ohne Mischstation aus, die stromauf der jeweiligen Filtrierstation angeordnet ist und einen Mischer sowie ein Mischbecken aufweist.

Erfindungsgemäß ist eine Steuereinrichtung zum Betreiben der Anlage vorgesehen, die zumindest mit der jeweiligen Dosiereinrichtung gekoppelt ist und die so ausgestaltet bzw. programmiert ist, dass sie im Betrieb der Anlage das vorstehend beschriebene, erfindungsgemäße Verfahren durchführen kann.

Bei einer vorteilhaften Weiterbildung der Anlage können wenigstens zwei Filtrierstationen vorgesehen sein, nämlich zumindest eine Hauptstrom-Filtrierstation und wenigstens eine Nebenstrom-Filtrierstation. Die Dosiereinrichtung kann zweckmäßig so ausgestaltet sein, dass sie das Adsorptionsadditiv der Wasserströmung innerhalb des jeweiligen Filterbeckens der beiden Filtrierstationen mit individuellen Dosierungen zugeben kann und zwar derart, dass in der jeweiligen Hauptstrom-Filtrierstation eine andere Filtrationsrate erzeugt wird als in der jeweiligen Nebenstrom-Filtrierstation. Der Hauptstrom charakterisiert sich durch einen anderen, in der Regel durch einen größeren, Volumenstrom als der Nebenstrom. Denkbar ist beispielsweise, im Hauptstrom eine kleinere Entfernungsrate zu bewirken als im Nebenstrom, wobei der Nebenstrom anschließend dem Hauptstrom zugemischt werden kann, um eine gewünschte Ziel-Entferneungsrate im Mischstrom zu erzeugen, sogenanntes "Blending". Durch Einstellen der Aufteilung zwischen Hauptstrom und Nebenstrom lässt sich im Produktwasser, also im dekontaminierten Wasser stets dieselbe hohe Ziel-Filtrationsrate einstellen, auch wenn das Rohwasser, also das kontaminierte Wasser einen variierenden Kontaminationsgrad besitzt. Denkbar sind auch unterschiedliche Verwendungen für den Hauptstrom und den Nebenstrom.

Das erfindungsgemäße Verfahren geht davon aus, dass die Adsorption der Nuklide direkt mit der Filtration kombiniert wird. Hierzu wird besagte Absorptionsschicht zu Beginn der Filtration, also während einer Startphase, vollständig auf der anströmseitigen Oberfläche der jeweiligen Filtereinrichtung generiert. Die Dosierung bzw. Zumischung des jeweiligen Adsorptionsadditivs, bei dem es sich bevorzugt um eine partikuläre, also durch Feststoffpartikel (Granulat) gebildete Adsorptionschemikalie handelt, geschieht hierbei innerhalb einer vergleichsweise kurzen Zeit, die mehrere Minuten betragen kann. Eine gleichmäßige, kontinuierliche Dosierung während des gesamten Filtrationsprozesses findet vorzugsweise nicht statt bzw. ist nicht erforderlich. Innerhalb kurzer Zeit kann sich die gewünschte Adsorptionsschicht ausbilden. Die hierzu erforderliche Absolutmenge an Adsorptionsadditiv ist vergleichbar und vorzugsweise sogar geringer als bei konventioneller, kontinuierlicher Dosierung. Das Adsorptionsadditiv wird so zugeführt, dass es sich zuvor nicht in der zu behandelnden Wasserströmung verteilen kann, so dass die Adsorptionsoberfläche des Adsorptionsadditivs bei der Formierung der Adsorptionsschicht an der anströmseitigen Oberflächen des jeweiligen Filterelements noch unbelegt, also frei von Nukliden und frei von Störstoffen ist. Auf diese Weise können Störprozesse durch ungewünschte Adsorption von konkurrierenden Stoffen minimiert werden. Das zu filtrierende kontaminierte Wasser muss vor Erreichen der anströmseitigen Oberfläche der jeweiligen Filtereinrichtung die Poren der Adsorptionsschicht passieren. Die Poren der Adsorptionsschicht können dabei größer sein als entsprechende Poren der jeweiligen Filtereinrichtung. Beispielsweise messen die Poren der Adsorptionsschicht wenige Mikrometer, während die Poren der Filtereinrichtung im Bereich von 10 nm bis 600 nm, vorzugsweise bei etwa 200 nm, liegen. Die Dicke der Adsorptionsschicht kann von 0,1 mm bis wenige Millimeter, vorzugsweise weniger als 10 mm, betragen.

Für die Zugabe des Adsorptionsadditivs kann eine zentrale Dosiereinrichtung verwendet werden, die spezifisch für jeden Filtrationsstrom, also individuell für jede Filtrierstation eine individuelle Dosierung ermöglicht. Auf diese Weise können unterschiedliche Entfernungsraten in der Wasseraufbereitungsanlage auch bei einer einstufigen Prozessführung erzielt werden. Dies hat den großen Vorteil, dass definierte Teilströme ohne weitere Behandlung direkt als Teilproduktstrom verwendet werden können. Beispielsweise ist ein Blendingstrom mit hohen Entfernungsraten denkbar. Andere Teilströme, die für eine weitere Behandlung und eine weitere Entfernung von anderen Schadstoffen bzw. von anderen Verunreinigungen vorgesehen sind, beispielsweise durch eine nachgeschaltete Umkehrosmoseeinrichtung, können mit einer geringeren Dosierung des Adsorptionsadditiv im jeweiligen Filtrationsbecken betrieben werden. In der Folge lassen sich Einsparungen der Betriebskosten erzielen, da insgesamt weniger Adsorptionsadditiv verbraucht wird.

Als Adsorptionsadditiv kann Manganoxid und/oder Mangandioxid verwendet werden oder eine Chemikalie, die im Wasser Manganoxid und/oder Mangandioxid in situ erzeugt. Zusätzlich oder alternativ kann grundsätzlich auch Eisenoxid zum Einsatz kommen. Das bevorzugte Adsorptionsadditiv, also Manganoxid und/oder Mangandioxid und/oder Eisenoxid, kann dem kontaminierten Wasser direkt zugesetzt werden. Besonders geeignet ist dabei eine Ausgestaltung, bei der das jeweilige Adsorptionsadditiv als poröses Präzipität mit einer besonders großen inneren Oberfläche vorliegt. Beispielsweise kann eine spezifische Oberfläche größer 350 qm/g, bestimmt nach PET, vorliegen. Da Mangandioxid altert und dabei an Porosität verliert, sollte es möglichst erst unmittelbar vor seiner Zugabe hergestellt werden.

Bevorzugt wird das verwendete Manganoxid und/oder Mangandioxid durch Oxidation aus einer wässrigen, auf einen pH-Wert zwischen 4,5 und 9, insbesondere zwischen 7 und 9 eingestellten Mangansalzlösung gewonnen. Ein geeignetes Mangansalz ist beispielsweise Mangansulfat. Ein geeignetes Oxidationsmittel ist beispielsweise Kaliumpermanganat oder Natriumhypochlorit. Es ist auch möglich, das Kaliumpermanganat basisch einzustellen, beispielweise mit NaOH, und das basische Kaliumpermanganat einer leicht sauren Mangansulfatlösung zuzusetzen. Auf diese Weise lässt sich die Stöchiometrie der Umsetzung besser kontrollieren.

Bei einer anderen Ausführungsform kann eine chemische Vorbehandlung des kontaminierten Wassers erfolgen, beispielsweise durch eine Zugabe von Bariumsalz. Bariumsalz kann die Ausfällung von Radium fördern. Das Bariumsalz kann dabei stromauf der Filtereinrichtung der Wasserströmung zugegeben werden. Ebenso ist denkbar, Bariumsalz beim Erzeugen der Adsorptionsschicht zuzugeben, so dass es mit einem entsprechenden Anteil in der Adsorptionsschicht enthalten ist.

Weiterhin ist auch die Zugabe zusätzlicher Chemikalien, wie z.B. Ozon, oder von Luftsauerstoff denkbar, beispielsweise um im Wasser enthaltene sonstige Metalle und Metallionen zu oxidieren, beispielsweise um Eisen durch Oxidation abzutrennen.

Eine keramische Filtermembran, die bei der jeweiligen Filtereinrichtung bevorzugt zur Anwendung kommt, kann insbesondere als mikroporöse Filtermembran ausgestaltet sein. Bei der jeweiligen keramischen Filtermembran handelt es sich zweckmäßig um eine flache Membranplatte mit innenliegenden Filtratabführkanälen und einer außenliegenden porösen Trennschicht, welche die anströmseitige Oberfläche aufweist. Derartige Membranen sind ausführlich beschrieben in der DE 10 2006 008 453 A1. Es ist bevorzugt, dass für das vorliegende Verfahren keramische Filtermembranen verwendet werden, bei denen die Poren, zumindest an der anströmseitigen Oberfläche, insbesondere in der vorgenannten Trennschicht, einen mittleren Durchmesser zwischen 80 nm und 800 nm, insbesondere zwischen 100 nm und 300 nm aufweisen.

Besonders vorteilhaft sind dabei plattenförmige Filtermembranen die zu Filtereinheiten zusammengefasst sein können, wie z.B. in der WO 2010/015374 A1 beschrieben.

Keramische Filtermembranen können bevorzugt mit einem Unterdruck von 100 mbar bis 600 mbar betrieben werden, so dass das dekontaminierte Produktwasser durch die jeweilige Filtermembran angesaugt wird. Denkbar ist jedoch auch eine Verwendung der keramischen Filtermembranen mit Überdruck, so dass das kontaminierte Wasser durch die Filtermembranen hindurchgedrückt wird.

Weiterhin ist von besonderem Vorteil die Verwendung eines Adsorptionsadditivs, das selbst in Form eines partikelförmigen Festkörpers vorliegt. Dies gilt insbesondere für das zuvor genannte Manganoxid und/oder Mangandioxid und/oder Eisenoxid. Dementsprechend ist die Adsorptionsschicht auf der anströmseitigen Oberfläche der jeweiligen Filtereinrichtung selbst porös, wobei die Adsorption der Nuklide keine wesentliche Verstopfung dieser Porosität bewirken kann. Dementsprechend führt die gezielt angebrachte Adsorptionsschicht keinesfalls zu einem Zusetzen der jeweiligen Filtereinrichtung. Vielmehr kann ein konstant hoher Flux ohne Verstopfung der Filtereinrichtung durch die Adsorptionsschicht erreicht werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, schaltplanartige Prinzipdarstellung einer Anlage zur Entfernung von radioaktiven Nukliden aus Wasser,
- Fig. 2: eine stark vereinfachte Schnittansicht einer Filtereinrichtung im Bereich einer Adsorptionsschicht.

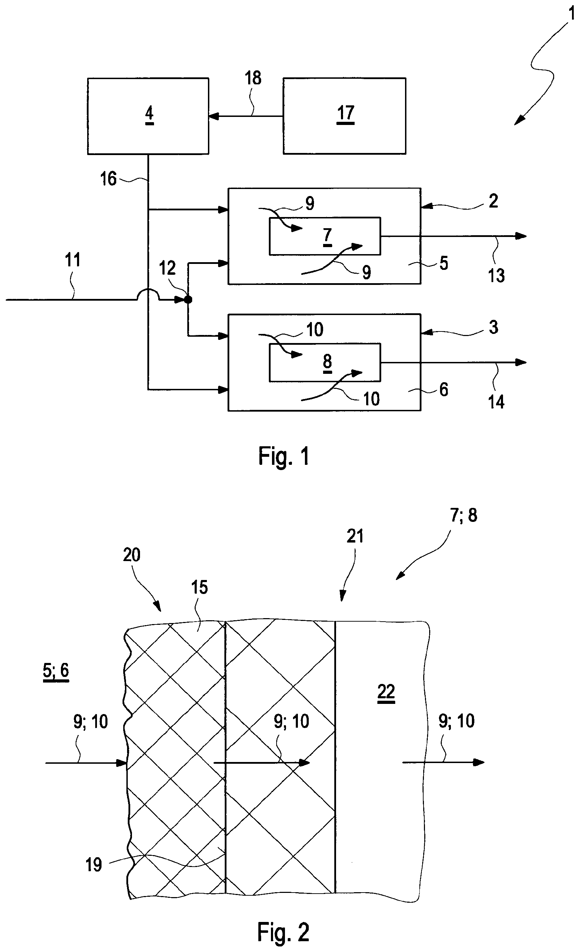

Entsprechend Fig. 1 umfasst eine Anlage 1, mit deren Hilfe sich radioaktive Nuklide, wie z.B. Radium-Isotope, aus Wasser entfernen lassen, beispielsweise um Trinkwasser oder Betriebswasser zu erzeugen, zumindest eine Filtrierstation 2, 3 und zumindest eine Dosiereinrichtung 4. Im Beispiel der Fig. 1 sind rein exemplarisch zwei derartige Filtrierstationen 2, 3 darstellt, denen eine gemeinsame Dosiereinrichtung 4 zugeordnet ist. Eine andere Anlage 1 kann auch mit nur einer einzigen Filtrierstation 2, 3 auskommen oder mehr als zwei Filtrierstationen 2, 3 aufweisen. Ebenso können mehrere Dosiereinrichtungen 4 vorgesehen sein.

Die jeweilige Filtrierstation 2, 3 weist jeweils ein Filterbecken 5 bzw. 6 auf, in dem jeweils wenigstens eine Filtereinrichtung 7 bzw. 8 angeordnet ist. Dabei ist die jeweilige Filtereinrichtung 7, 8 jeweils von einer durch Pfeile angedeuteten Wasserströmung 9 bzw. 10 durchströmbar. Die Wasserströmungen 9, 10 werden dabei über eine gemeinsame Zuleitung 11 zugeführt, die bei 12 aufgezweigt ist, um kontaminiertes Wasser, also radioaktive Nuklide enthaltendes Wasser den Filterbecken 5, 6 parallel zuzuführen. Über separate wegführende Leitungen 13, 14 wird das gereinigte Wasser, also das dekontaminierte Wasser oder Produktwasser von den Filtereinrichtungen 7, 8 abgeführt.

Die Dosiereinrichtung 4 ist so ausgestaltet, dass sie den Wasserströmungen 9, 10 stromauf der Filtereinrichtungen 7, 8 ein Absorptionsadditiv 15 zuführen kann, das in Fig. 2 angedeutet ist. Dabei kann die Dosiereinrichtung 4 das Adsorptionsadditiv 15 der jeweiligen Wasserströmung 9, 10 innerhalb des jeweiligen Filterbeckens 5, 6 zuführen. Dementsprechend ist eine Dosierleitung 16 der Dosiereinrichtung 4 unmittelbar an das jeweilige Filterbecken 5, 6 angeschlossen. Die jeweilige Filtereinrichtung 7, 8 ist dabei hinsichtlich ihrer Filtrationswirkung bzw. Porengröße so eingestellt, dass sie für Wasser durchlässig und für das Adsorptionsadditiv 15 sowie für das Adsorptionsadditiv 15 mit daran angelagerten Nukliden im Wesentlichen undurchlässig ist.

Sofern wie in Fig. 1 dargestellt zumindest zwei Filtrierstationen 2, 3 vorgesehen sind, kann die eine Filtrierstation 2 als Hauptstrom-Filtrierstation 2 dienen, während die andere Filtrierstation 3 als Nebenstrom-Filtrierstation 3 dient. Die Dosiereinrichtung 4 kann den separaten Filtrierstationen 2, 3 die jeweils benötigte Menge an Adsorptionsadditiv 15 separat zuführen bzw. in das jeweilige Filterbecken 5, 6 einleiten. Zweckmäßig kann die Zudosierung des Adsorptionsadditivs 15 zu den beiden Filterbecken 5, 6 individualisiert so erfolgen, dass sich an den beiden Filtrierstationen 2, 3 unterschiedliche Filtrationsraten einstellen.

Zum Betreiben der Anlage 1 ist diese zweckmäßig mit einer Steuereinrichtung 17 ausgestattet, die beispielsweise über eine Steuerleitung 18 mit der Dosiereinrichtung 4 gekoppelt ist. Die Steuereinrichtung 17 ist zweckmäßig so ausgestaltet bzw. programmiert, dass sie das vorstehend ausführlich erläuterte und nachfolgend zusammengefasst skizzierte Verfahren zum Entfernen von radioaktiven Nukliden aus Wasser durchführen kann, wenn die Anlage 1 im Betrieb ist.

Um die Nuklide aus dem kontaminierten Wasser zu entfernen, beispielsweise um ein Produktwasser zu erzeugen, das als Trinkwasser oder Betriebswasser verwendet werden kann oder zu solchen aufbereitet werden soll, wird das Adsorptionsadditiv 15 so in die Filterbecken 5, 6 eingebracht, dass sich gemäß Fig. 2 an einer anströmseitigen Oberfläche 19 der jeweiligen Filtereinrichtung 7, 8 eine Adsorptionsschicht 20 aus dem Adsorptionsadditiv 15 ausbildet. Die Adsorptionsschicht 20 wird dabei aus Adsorptionsadditiv 15 erzeugt, was im Wesentlichen noch frei von Nukliden ist, so dass die Absorption der Nuklide während einer Filtrationsphase eines Filtrationsprozesses im Wesentlichen erst, vorzugsweise ausschließlich innerhalb der Adsorptionsschicht 20 erfolgt.

Eine derartige Adsorptionsschicht 20 kann beispielsweise dadurch erzeugt werden, dass während einer Startphase des Filtrationsprozesses das Adsorptionsadditiv 15 zu der jeweiligen, die Filtereinrichtung 7, 8 durchströmenden Wasserströmung 9, 10 zugegeben wird. Während der Startphase kann dabei die jeweilige Wasserströmung 9, 10 durch nicht kontaminiertes bzw. durch bereits gereinigtes Wasser gebildet sein. Grundsätzlich lässt sich jedoch auch schon während der Startphase kontaminierte Rohwasser verwenden, um die Adsorptionsschicht aufzubringen. Durch die Zugabe des Adsorptionsadditivs 15 zur Wasserströmung 9, 10, welche die jeweilige Filtereinrichtung 7, 8 durchströmt, bildet sich die Adsorptionsschicht 20 nach Art eines Filterkuchens selbsttätig an der anströmseitigen Oberfläche 19 der jeweiligen Filtereinrichtung 7, 8 aus. Die Zugabe des Adsorptionsadditivs 15 in die jeweilige Wasserströmung 9, 10 bzw. in das jeweilige Filterbecken 5, 6 erfolgt zweckmäßig so, dass möglichst die gesamte anströmseitige Oberfläche 19 der jeweiligen Filtereinrichtung 7, 8 möglichst gleichmäßig mit dem Adsorptionsadditiv 15 beladen wird. Die Startphase kann einige Minuten andauern. Die Startphase ist jedenfalls deutlich kürzer als die darauf folgende Filtrationsphase, in der dann mit Hilfe der Adsorptionsschicht 20 die Nuklide aus dem kontaminierten Wasser entfernt werden können.

Zweckmäßig erfolgt die Zugabe des Adsorptionsadditivs in die Wasserströmung 9, 10 ausschließlich während der genannten Startphase, so dass insbesondere während der deutlich längeren Filtrationsphase keine Zugabe von Adsorptionsadditiven 15 erfolgt. Die Zugabe des jeweiligen Adsorptionsadditivs 15 während der Startphase bzw. während einer Dosierzeit, die innerhalb der Startphase liegt, erfolgt mit einer relativ hohen Konzentration, die beispielsweise wenigstens 50 ppm oder mindestens 100 ppm, vorzugsweise zumindest 500 ppm und insbesondere wenigstens 1000 ppm, betragen kann. Die absolute Menge an Adsorptionsadditiv hängt dabei von der Kontamination des Rohwassers, vom Volumenstrom des Rohwasser und von der während des Filtrationsprozesses zu reinigenden absoluten Menge des Rohwassers. Am Ende des Filtrationsprozesses ist die Adsorptionsschicht 20 idealerweise nahezu gesättigt von den adsorbierten Nukliden. Für einen neuen Filtrationsprozess kann die jeweilige Filtereinrichtung 7, 8 regeneriert werden, beispielsweise mittels einer Rückspülung, bei der die erschöpfte bzw. verbrauchte Adsorptionsschicht 20 von der anströmseitigen Oberfläche der Filtereinrichtung 7, 8 abgespült wird. Anschließend kann mit einer neuen Startphase wieder eine neue unverbrauchte Adsorptionsschicht 20 aufgebracht werden.

Besonders vorteilhaft ist eine Ausführungsform, bei welcher die Filtereinrichtung 7, 8 mit wenigstens einer keramischen Filtermembran 21 ausgestattet ist, welche zumindest einen Teil der anströmseitigen Oberfläche 19 der jeweiligen Filtereinrichtung 7, 8 aufweist. Gemäß Fig. 2 besitzt die Filtermembran 21 in ihrem Inneren zumindest einen Kanal 22, in den die gereinigte Wasserströmung 9, 10 eintritt und aus dem die gereinigte Wasserströmung 9, 10 aus der jeweiligen Filtereinrichtung 7, 8 abgeführt werden kann. Die Filtermembran 21 besitzt zweckmäßig eine Porengröße im zweistelligen oder dreistelligen Nanometerbereich.

Als Absorptionsadditiv 15 wird zweckmäßig ein Feststoff verwendet, der granulatartig oder flockenartig, also in Form von Partikeln zum Einsatz kommt. Der verwendete Festkörper kann dabei solide oder porös sein. Hierdurch ergibt sich eine poröse Struktur für die Adsorptionsschicht 20. Die Porosität de Absorptionsschicht 20 ist dabei vorzugsweise im einstelligen oder zweistelligen Mikrometerbereich. Grundsätzlich kann die Porosität der Adsorptionsschicht 20 auch kleiner sein als diejenige der Filtermembran 21.

Die Reinigung bzw. Dekontamination des Wassers erfolgt dadurch, dass bei der Durchströmung der Adsorptionsschicht 20 eine Adsorption der Nuklide an dem Adsorptionsadditiv 15 erfolgt und zwar mit einer derartigen Effizienz, dass eine Adsorptionsrate von mindestens 90 % bis 95 % erzielbar ist.

## Patentansprüche

1. Verfahren zum Entfernen von radioaktiven Nukliden aus Wasser,
- bei dem wenigstens ein Absorptionsadditiv (15), das für die Nuklide absorbierend wirkt, verwendet wird,
- bei dem wenigstens eine Filtereinrichtung (7, 8), die für das jeweilige Adsorptionsadditiv (15) undurchlässig ist, verwendet wird,
**dadurch gekennzeichnet,**
**dass** mit dem Adsorptionsadditiv (15) auf einer anströmseitigen Oberfläche (19) der jeweiligen Filtereinrichtung (7, 8) eine Adsorptionsschicht (20) erzeugt wird.

2. Verfahren nach Anspruch 1,
**dadurch gekennzeichnet,**
**dass** die Adsorptionsschicht (20) mit Adsorptionsadditiv (15) erzeugt wird, das im Wesentlichen frei von Nukliden ist.

3. Verfahren nach Anspruch 1 oder 2,
**dadurch gekennzeichnet,**
**dass** die Adsorptionsschicht (20) mit Adsorptionsadditiv (15) erzeugt wird, das mindestens zu 50 % frei von Nukliden ist.

4. Verfahren nach einem der Ansprüche 1 bis 3,
**dadurch gekennzeichnet,**
**dass** die Adsorption der Nuklide während einer Filtrationsphase eines Filtrationsprozesses weitgehend oder im Wesentlichen innerhalb der Adsorptionsschicht (20) erfolgt.

5. Verfahren nach einem der Ansprüche 1 bis 4,
**dadurch gekennzeichnet,**
**dass** mindestens 50 % der Adsorption der Nuklide während einer Filtrationsphase eines Filtrationsprozesses innerhalb der Adsorptionsschicht (20) erfolgt.

6. Verfahren nach einem der Ansprüche 1 bis 5,
**dadurch gekennzeichnet,**
**dass** das Erzeugen der Adsorptionsschicht (20) während einer Startphase eines Filtrationsprozesses durch Zugabe des Adsorptionsadditivs (15) zu einer die jeweilige Filtereinrichtung (7, 8) durchströmenden Wasserströmung (9, 10) erfolgt.

7. Verfahren nach Anspruch 6,
**dadurch gekennzeichnet,**
**dass** das Adsorptionsadditiv (15) der Wasserströmung (9, 10) weitgehend oder im Wesentlichen nur während der Startphase zugeführt wird.

8. Verfahren nach einem der Ansprüche 1 bis 7,
**dadurch gekennzeichnet,**
**dass** mindestens 50 % des insgesamt während eines Filtrationsprozesses verwendeten Adsorptionsadditivs (15) in der Adsorptionsschicht (20) enthalten sind.

9. Verfahren nach einem der Ansprüche 1 bis 8,
**dadurch gekennzeichnet,**
**dass** das Adsorptionsadditiv (15) zum Erzeugen der Adsorptionsschicht (20) einer die jeweilige Filtereinrichtung (7, 8) durchströmenden Wasserströmung (9, 10) mit einer Konzentration von mindestens 50 ppm zugeführt wird.

10. Verfahren nach einem der Ansprüche 1 bis 9,
**dadurch gekennzeichnet,**
**dass** in der jeweiligen Filtereinrichtung (7, 8) wenigstens eine keramische Filtermembran (21) verwendet wird.

11. Verfahren nach einem der Ansprüche 1 bis 10,
**dadurch gekennzeichnet,**
**dass** das Adsorptionsadditiv (15) ein partikelförmiger Festkörper ist.

12. Anlage zur Entfernung von radioaktiven Nukliden aus Wasser,
- mit wenigstens einer Filtrierstation (2, 3), die in einem Filterbecken (5, 6) wenigstens eine Filtereinrichtung (7, 8) enthält, die von einer Wasserströmung (9, 10) durchströmbar ist,
- mit mindestens einer Dosiereinrichtung (4) zum Zugeben eines Adsorptionsadditivs (15) zur Wasserströmung (9, 10), die so angeordnet und/oder ausgebildet ist, dass sie das Adsorptionsadditiv (15) der Wasserströmung (9, 10) innerhalb des jeweiligen Filterbeckens (5, 6) oder unmittelbar stromauf davon zugeben kann,
**gekennzeichnet durch** eine Steuereinrichtung (17) zum Betreiben der Anlage (1), die mit der jeweiligen Dosiereinrichtung (4) gekoppelt ist und die so ausgestaltet und/oder programmiert ist, dass sie im Betrieb der Anlage (1) das Verfahren nach einem der Ansprüche 1 bis 11 durchführt.

13. Anlage nach Anspruch 12,
**dadurch gekennzeichnet,**
- **dass** wenigstens zwei Filtrierstationen (2, 3) vorgesehen sind, nämlich wenigstens eine Hauptstrom-Filtrierstation (2) und wenigstens eine Nebenstrom-Filtrierstation (3),
- **dass** die Dosiereinrichtung (4) zum Zugeben des Adsorptionsadditivs (15) der Wasserströmung (9, 10) innerhalb des jeweiligen Filterbeckens (5, 6) der wenigstens zwei Filtrierstationen (2, 3) ausgestaltet ist, derart, dass in der jeweiligen Hauptstrom-Filtrierstation (2) eine andere Filtrationsrate erzeugt wird als in der jeweiligen Nebenstrom-Filtrierstation (3).

## Claims

1. Method for removing radioactive nuclides from water,
- in which at least one absorption additive (15), which has an absorbing effect on the nuclides, is used,
- in which at least one filter device (7, 8) which is impermeable to the respective adsorption additive (15) is used,
**characterized by**
that an adsorption layer (20) is produced with the adsorption additive (15) on an upstream surface (19) of the respective filter device (7, 8).

2. Method according to claim 1,
**characterized by**
that the adsorption layer (20) is produced with adsorption additive (15) which is essentially free of nuclides.

3. Method according to claim 1 or 2,
**characterized by**
that the adsorption layer (20) is produced with adsorption additive (15) which is at least 50 % free of nuclides.

4. Method according to any one of claims 1 to 3,
**characterized by**
that the adsorption of the nuclides during a filtration phase of a filtration process largely or essentially takes place within the adsorption layer (20).

5. Method according to any one of claims 1 to 4,
**characterized by**
that at least 50 % of the adsorption of the nuclides takes place during a filtration phase of a filtration process within the adsorption layer (20).

6. Method according to any one of claims 1 to 5,
**characterized by**
that the adsorption layer (20) is formed during a start phase of a filtration process by adding the adsorption additive (15) to a water flow (9, 10) flowing though the respective filter device (7, 8).

7. Method according to claim 6,
**characterized by**
that the adsorption additive (15) is added to the water flow (9, 10) largely or essentially only during the starting phase.

8. Method according to any one of claims 1 to 7,
**characterized by**
that at least 50% of the total adsorption additive (15) used during a filtration process is contained in the adsorption layer (20).

9. Method according to any one of claims 1 to 8,
**characterized by**
that the adsorption additive (15) for producing the adsorption layer (20) is supplied to a water flow (9, 10) flowing through the respective filter device (7, 8) at a concentration of at least 50 ppm.

10. Method according to any one of claims 1 to 9,
**characterized by**
that at least one ceramic filter membrane (21) is used in the respective filter device (7, 8).

11. Method according to any one of claims 1 to 10,
**characterized by**
that the adsorption additive (15) is a particulate solid.

12. System for the removal of radioactive nuclides from water,
- with at least one filtering station (2, 3), which in a filter basin (5, 6) contains at least one filter device (7, 8) through which a flow of water (9, 10) can pass,
- with at least one dosing device (4) for adding an adsorption additive (15) to the water flow (9, 10), which is arranged and/or configured in such a way that it can add the adsorption additive (15) to the water flow (9, 10) within the respective filter basin (5, 6) or directly upstream thereof,
**characterized by** a control device (17) for operating the system (1), which is coupled to the respective dosing device (4) and which is configured and/or programmed to carry out the method according to one of claims 1 to 11 during operation of the system (1).

13. System according to claim 12,
**characterized by**
- that at least two filtering stations (2, 3) are provided, namely at least one main stream filtering station (2) and at least one bypass filtering station (3),
- in that the dosing device (4) is configured to add the adsorption additive (15) to the water flow (9, 10) within the respective filter basin (5, 6) of the at least two filtering stations (2, 3) in such a way that a different filtration rate is generated in the respective main flow filtering station (2) than in the respective bypass filtering station (3).

## Revendications

1. Procédé visant à éliminer des nucléides radioactifs présents dans l'eau, consistant à
- mettre en œuvre au moins un additif d'absorption (15) qui a un effet absorbant sur lesdits nucléides,
- mettre en œuvre au moins un dispositif de filtre (7, 8) qui est imperméable pour l'additif d'adsorption (15) concerné,
**caractérisé en ce que**
l'on crée, à partir dudit additif d'adsorption (15), une couche d'adsorption (20) sur une surface (19) située en amont du dispositif de filtre (7, 8) concerné.

2. Procédé selon la revendication 1,
**caractérisé en ce que**
la couche d'adsorption (20) est créée à partir de l'additif d'adsorption (15) qui est sensiblement exempt de nucléides.

3. Procédé selon les revendications 1 ou 2,
**caractérisé en ce que**
la couche d'adsorption (20) est créée à partir de l'additif d'adsorption (15) qui est à au moins 50 % exempt de nucléides.

4. Procédé selon l'une des revendications 1 à 3,
**caractérisé en ce que**
l'adsorption des nucléides est réalisée, pendant une phase de filtration d'un processus de filtration, majoritairement ou sensiblement au sein de la couche d'adsorption (20).

5. Procédé selon l'une des revendications 1 à 4,
**caractérisé en ce que**
l'adsorption des nucléides est réalisée à au moins 50 % pendant une phase de filtration d'un processus de filtration, au sein de la couche d'adsorption (20).

6. Procédé selon l'une des revendications 1 à 5,
**caractérisé en ce que**
la création de la couche d'adsorption (20) est réalisée, pendant une phase d'initiation d'un processus de filtration, en ajoutant l'additif d'adsorption (15) à un flux d'eau (9, 10) traversant le dispositif de filtre (7, 8) concerné.

7. Procédé selon la revendication 6,
**caractérisé en ce que**
l'additif d'adsorption (15) est ajouté au flux d'eau (9, 10) majoritairement ou sensiblement pendant ladite phase d'initiation uniquement.

8. Procédé selon l'une des revendications 1 à 7,
**caractérisé en ce que**
au moins 50 % de la totalité de l'additif d'adsorption (15) mis en œuvre dans un processus de filtration sont contenus dans la couche d'adsorption (20).

9. Procédé selon l'une des revendications 1 à 8,
**caractérisé en ce que**
l'additif d'absorption (15) est ajouté à un flux d'eau (9, 10) traversant le dispositif de filtre (7, 8) concerné dans une concentration d'au moins 50 ppm afin de créer la couche d'adsorption (20).

10. Procédé selon l'une des revendications 1 à 9,
**caractérisé en ce que**
au moins une membrane filtrante céramique (21) est mise en œuvre dans le dispositif de filtre (7, 8) concerné.

11. Procédé selon l'une des revendications 1 à 10,
**caractérisé en ce que**
l'additif d'adsorption (15) est un corps solide sous forme de particules.

12. Installation permettant d'éliminer des nucléides radioactifs présents dans l'eau,
- comportant au moins une station de filtrage (2, 3) contenant, au sein d'un bassin filtrant (5, 6), au moins un dispositif de filtre (7, 8) lequel peut être traversé par un flux d'eau (9, 10),
- comportant un dispositif de dosage (4) permettant d'ajouter un additif d'adsorption (15) au flux d'eau (9, 10) et étant agencé et/ou réalisé tel qu'il peut ajouter l'additif d'adsorption (15) au flux d'eau (9, 10) au sein du bassin filtrant (5, 6) immédiatement en amont de celui-ci,
**caractérisé par** un dispositif de commande (17) permettant de faire fonctionner l'installation (1) et étant couplé au dispositif de dosage (4) concerné alors qu'il est réalisé et/ou programmé de manière à ce qu'il mette en œuvre, lorsque l'installation (1) est en fonctionnement, le procédé selon l'une des revendications 1 à 11.

13. Installation selon la revendication 12,
**caractérisé en ce que**
- elle est pourvue d'au moins deux stations de filtrage (2, 3), s'agissant d'au moins une station de filtrage de flux principal (2) et d'au moins une station de filtrage de flux secondaire (3),
- le dispositif de dosage (4) est réalisé, afin d'ajouter l'additif d'adsorption (15) au flux d'eau (9, 10) au sein du bassin filtrant (5, 6) concerné des au moins deux stations de filtrage (2, 3), de manière à ce qu'elle engendre dans la station de filtrage de flux principal (2) concernée un taux de filtration qui est différent par rapport celui dans la station de filtrage de flux secondaire (3) concernée.
